# FASCICULE DE BREVET EUROPEEN

(11) **EP 2 849 938 B1**
(45) Date de publication et mention de la délivrance du brevet: **25.05.2016**
(21) Numéro de dépôt: 13725398.5
(22) Date de dépôt: 30.04.2013
(51) Int. Cl.: B32B 7/12, B32B 15/08, F16B 43/00, B32B 7/06, B32B 15/092

(54) **PROCÉDÉ DE FABRICATION D'UNE CALE DE RÉGLAGE**
VERFAHREN ZUR HERSTELLUNG EINES JUSTIERUNGSABSTANDSHALTERS
METHOD FOR PRODUCING AN ADJUSTMENT SPACER

(30) Priorité: 18.05.2012 FR 1254561
(43) Date de publication de la demande: 25.03.2015
(73) Titulaire: Gastel, Daniel André, 78370 Plaisir les Gatines (FR)
(72) Inventeur: Gastel, Daniel André, 78370 Plaisir les Gatines (FR)
(74) Mandataire: Lefevre-Groboillot, David André
(86) Numéro de dépôt international: PCT/FR2013/050953
(87) Numéro de publication internationale: WO 2013/171395

(56) Documents cités:
- EP-A1- 0 667 233
- GB-A- 562 795
- US-A1- 2008 081 141

## Description

L'invention concerne de manière générale les produits laminés présentant une épaisseur réglable par délitage, les procédés de fabrication de tels produits, et leur application comme cales de réglage pour des ensembles mécaniques.

Un produit laminé présentant une épaisseur réglable par délitage comprend un empilement alterné de feuilles et de couches d'un matériau adhésif. Chaque feuille présente une résistance intrinsèque au déchirement et chaque couche de matériau adhésif relie l'une à l'autre deux feuilles adjacentes de l'empilement par une force de liaison plus faible que la résistance des feuilles au déchirement, ce dont il résulte que chaque feuille peut être détachée de l'empilement sans se déchirer. Ces matériaux, dits pelables, sont largement utilisés comme cales d'épaisseur dans des ensembles mécaniques complexes. Ces ensembles peuvent comporter plusieurs centaines, voire plusieurs milliers de pièces, présentant chacune des tolérances dimensionnelles. La somme des tolérances crée des jeux qui peuvent dans certains cas être considérables, plusieurs millimètres, qu'il est nécessaire de compenser afin de permettre aux ensembles mécaniques d'assurer correctement leurs fonctions.

Pour cela, des cales de réglage, le plus souvent pelables, en matériaux métalliques ou en polymères sont utilisée. Ces cales pelables sont composées de lamelles fines, formant des feuilles, superposées et collées entre elles de manière à constituer des épaisseurs plus ou moins importantes, et usinées pour s'adapter au contour extérieur des organes à ajuster. Le réglage se fait par la réduction de l'épaisseur de la cale en pelant une ou plusieurs de ces lamelles et en insérant la cale à l'endroit où le jeu a été constaté.

Des produits de ce type sont enseignés dans le document FR2831095, et sont notamment utilisés comme cales de réglage pour des ensembles mécaniques.

Toutefois, dans le cas de cales de réglage réalisées à partir de feuilles métalliques, le délitage desdites feuilles métalliques de la cale de réglage nécessite un outil tranchant, comme un scalpel ou un cutter, afin de pouvoir rompre les polymères de la résine qui forme les couches de matériau liant. Une telle opération de délitage d'une cale de réglage présente deux inconvénients :
- l'opération est longue à réaliser, ralentissant d'autant les cadences d'assemblages des éléments nécessitant de telles cales de réglages ; et
- il y a un fort risque d'accident pour l'opérateur manipulant l'outil tranchant servant à l'opération de délitage de la cale de réglage.

Un but de l'invention est de fournir une cale de réglage métallique dont le délitage soit rapide et sécurisé.

A cette fin, il est prévu, selon l'invention, un procédé de fabrication d'une cale de réglage comprenant des étapes de :
- Préparation d'une solution liquide comprenant une résine non polymérisée et du solvant en surabondance ;
- Enduction de plusieurs feuilles de métal avec la solution liquide de façon à constituer un film de résine sur au moins une face de feuille;
- Empilement des feuilles de métal de façon à ce que deux feuilles de métal adjacentes soient séparées par le film de résine; et
- Cuisson durant laquelle l'empilement de feuilles de métal précédemment réalisé est soumis, durant une durée prédéterminée, à une température dont une valeur est supérieure à une valeur d'une température de dégradation ou de brulage de la résine.

Ainsi, le fait de cuire la résine située entre les feuilles de métal à une température supérieure à une température de dégradation de ladite résine permet d'affaiblir suffisamment la force de cohésion réalisée entre les feuilles métalliques pour permettre un délitage simple, rapide et sécurisé, car sans outil, tout en assurant la cohésion de l'empilement lors des manipulations et opérations que l'empilement peut subir suite à cette étape de cuisson.

Avantageusement, mais facultativement, le procédé de fabrication précédent comporte au moins l'une des caractéristiques suivantes :
- préalablement à l'étape de cuisson, le procédé de fabrication comprend une étape de durant laquelle la résine est conduite à un état de polymérisation ;
- ledit état de polymérisation de la résine est un état final de polymérisation ;
- pour polymériser la résine, cette dernière est soumise à une température comprise entre 170°C et 180°C ;
- pour préparer la solution liquide, le solvant est ajouté dans une proportion supérieure à 20% de la solution de façon à disperser la résine pour obtenir une épaisseur infinitésimale du film de résine ;
- pour préparer la solution liquide, le solvant est ajouté dans une proportion inférieure ou égale à 40% de la solution ;
- la résine est une résine du type appartenant à la famille des résines thermodurcissables ;
- le procédé comporte en outre une étape d'ébauchage de la cale après l'étape de cuisson ;
- lors de l'étape de cuisson, une valeur de la durée prédéterminée est de trois heures ;
- lors de l'étape de cuisson, la valeur de la température est supérieure à 260°C, la résine étant une résine époxy ; et,
- la valeur de la température est supérieure ou égale à 300°C.

Il est aussi prévu, selon l'invention, une cale de réglage métallique fabriquée selon le procédé de fabrication présentant au moins l'une des caractéristiques précédentes.

Avantageusement, mais facultativement, la cale de réglage présente en outre la caractéristique suivante :
- lors d'un délitage, les feuilles métalliques pelées sont réutilisables.

D'autres caractéristiques et avantages de l'invention ressortiront clairement de la description qui en est faite ci-dessous, à titre indicatif et nullement limitatif, d'un mode de réalisation et d'une variante.

Une cale de réglage comprend plusieurs feuilles superposées. Les feuilles sont en métal tel que l'acier, de préférence inoxydable, ou l'aluminium, ou encore tout type de métal pouvant être mis en forme de feuilles afin de réalisé une cale de réglage, sélectionnées pour leur qualité de résistance à la compression en vue de garantir une épaisseur constante de feuille, pour leur qualité de résistance à la traction en vue de garantir une résistance élevée au déchirement et pour leur compatibilité avec les autres matériaux de construction de l'assemblage dans lequel la cale d'épaisseur est appelée à être utilisée.

Les feuilles sont enduites d'une résine dont une polymérisation finale en maintenant les feuilles serrées les unes contre les autres, permet:
- de maintenir les feuilles liées entre elles avec une force d'adhérence suffisamment élevée pour assurer une cohésion suffisante du produit stratifié et suffisamment basse pour permettre un arrachement volontaire de feuilles une à une sans déchirement, en d'autres termes un maintien ou un arrachement de chaque feuille dans son intégralité. Ainsi, l'arrachage de chaque feuille garantit une diminution d'épaisseur égale à l'épaisseur d'une feuille. Un nombre initial de feuilles donnant une épaisseur initiale connue, un nombre final de feuilles donne une épaisseur finale qu'il est possible de déterminer avec précision.
- d'offrir une certaine résistance au cisaillement entre feuilles. Cette résistance au cisaillement, en s'opposant au glissement des feuilles les unes sur les autres, en combinaison avec les qualités de résistance à la traction du métal de la feuille, s'oppose au cintrage du produit stratifié en vue de garantir une planéité parfaite. En effet, un défaut de planéité provoquerait des écarts entre les sommets des courbes qui iraient au-delà de l'épaisseur obtenue par accumulation des épaisseurs de feuilles.

Afin d'obtenir de tel résultat, un procédé de fabrication d'une cale de réglage pour caler une deuxième pièce sur une première pièce est décrit.

Dans une première étape, une solution liquide comprenant une résine non polymérisée, à laquelle un solvant en surabondance est ajouté, est préparée. Les quantités de solvant ajoutées habituellement, varient généralement de 15 à 20% pour faciliter une enduction de feuilles par des rouleaux encreurs comme dans une machine offset, par pulvérisation ou par trempage dans un bain. La surabondance a lieu dès que le solvant est ajouté dans une proportion supérieure à 20% de la solution avec pour effet de disperser la résine. Pour obtenir une dispersion plus conséquente de la résine, il est possible d'aller jusqu'à 40% sans pénaliser la polymérisation future de la résine. Il est possible de légèrement dépasser la valeur haute pour tenir compte d'une évaporation du solvant avant les étapes suivante, notamment avant l'étape de polymérisation. Le type de solvant est adapté à la résine. L'acétone se révèle être un solvant très efficace, notamment pour une résine appartenant à la famille des thermodurcissables tels que, plus particulièrement les résines époxydes. Pour remédier au caractère incommodant des vapeurs d'acétone, il est possible d'utiliser d'autres solvants ou de travailler sous hôte aspirante. Pour des résines appartenant à la famille des thermoplastiques, des solvants adaptés tels que préconisés par les fournisseurs de résine sont utilisables.

Dans une deuxième étape, plusieurs feuilles de métal sont enduites avec la solution liquide obtenue dans l'étape précédente de façon à constituer un film de résine sur au moins une face de feuille, par exemple par rouleau encreur ou sur les deux faces par trempage. Comme indiqué ci-dessus, plusieurs types de métal conviennent selon l'usage attendu, notamment parmi les aciers inoxydables pour leur qualité de tenue dans le temps et leur excellente qualité de surface dont la plus lisse possible est exigible. La forte dispersion de résine dans la solution riche en solvant, permet d'obtenir une épaisseur infinitésimale de film de résine sur les feuilles, pouvant être réduite à une échelle moléculaire des monomères ou oligomères constituant la résine, juste suffisante pour permettre une polymérisation ultérieure.

Dans une troisième étape, les feuilles sont empilées auxquelles est éventuellement superposée une dernière feuille non enduite sur une face libre enduite de la feuille précédente. De la sorte les feuilles sont séparées l'une de l'autre par un film de résine formant la couche de matériau liant. Les feuilles sont ensuite pressées les unes contre les autres, favorisant une évacuation d'un éventuel surplus résiduel de la solution liquide de sorte que les faces en regard de deux feuilles métalliques successives sont très proches l'une de l'autre.

Dans une quatrième étape, la résine est conduite à un état de polymérisation qui confère à la cale une force de cohésion entre feuilles ayant un module qui est supérieure à une valeur minimale de maintien de la cale rigide dans un plan. Ce module peut dans certains cas être obtenu avec un état de polymérisation partielle. Un état de polymérisation totale, en augmentant la force de cohésion, renforce la rigidité planaire de la cale.

Le degré de polymérisation est sélectionné pour obtenir une composante de la force de cohésion qui est perpendiculaire au plan, inférieure à une valeur maximale qui permet de peler l'une des feuilles à laquelle est appliquée une force de séparation supérieure à ladite valeur maximale. La faible épaisseur du film de résine permet de pousser le degré de polymérisation jusqu'à un état de polymérisation totale en maintenant la composante perpendiculaire à la valeur maximale qui permet de peler l'une des feuilles à laquelle est appliquée une force de séparation supérieure à ladite valeur maximale. L'avantage de l'état de polymérisation total ou final, est d'être stable et de conserver ainsi ses propriétés dans le temps.

C'est pourquoi il est préféré un état final de polymérisation dans lequel la polymérisation totale de la résine offre de bonnes qualités de stabilité. Pour polymériser totalement la résine lorsqu'elle est du type appartenant à la famille des résines thermodurcissables, la cale, ou de manière plus général le produit stratifié obtenu par les étapes précédentes, est soumise à une température comprise entre 170°C et 180°C, dans un four ou une étuve. La durée de maintien en température varie de 1 à 7 heures suivant le type de résine utilisée.

Une fois l'étape de polymérisation réalisée, la cale de réglage est ébauchée par usinage et/ou massicotage dans une cinquième étape. Toutefois, le délitage d'une telle cale de réglage ainsi obtenu nécessite l'utilisation d'un outil tranchant de type scalpel ou cutter, ce qui ne permet pas un délitage simple, rapide et sécurisé.

Pour cela, une sixième étape, dite de cuisson, est réalisée. Dans cette étape, la cale de réglage, une fois ébauchée, est soumise de nouveau, dans un four ou une étuve, à une température supérieure à une température de dégradation ou de brûlage de la résine pendant une durée prédéterminée. Par exemple, dans le cas de l'utilisation de la résine époxy, la température utilisée est supérieure à 210°C et la durée est de 3 heures environ. De manière préférentielle, la température utilisée est supérieure ou égale à 220°C. De manière encore préférentielle, la température utilisée est supérieure ou égale à 240°C. De manière encore préférentielle, la température utilisée est supérieure ou égale à 260°C. De manière encore préférentielle, la température utilisée est supérieure ou égale à 270°C. De manière encore préférentielle, la température utilisée est supérieure ou égale à 280°C. De manière encore préférentielle, la température utilisée est supérieure ou égale à 300°C.

Dans une variante de réalisation, la cale de réglage ébauchée est préalablement emballée dans une feuille d'aluminium, de type ménager par exemple, avant d'être replacée dans le four ou l'étuve.

Après cette sixième étape, il a été constaté que l'intégrité de la cale de réglage n'est pas modifiée. En effet, cette dernière est manipulable sans avoir à changer les habitudes dans ce domaine. Cela signifie que, malgré une température supérieure à la température de dégradation ou de brulage de la résine, il reste suffisamment de matériau liant entre les feuilles formant la cale de réglage pour les maintenir suffisamment entre elles pour permettre toute manutention sur un lieu d'assemblage par exemple. A l'utilisation, afin de permettre un délitage de la cale de réglage ainsi réalisée, il suffit d'appliquer un coup sec sur une partie d'un bord de la cale de réglage, comme un simple coup sur le coin d'une table d'atelier, pour amorcer le délitage, les feuilles empilées de la cale de réglage formant alors un éventail au niveau de la partie du bord de la cale ayant reçu le coup sec. Dès lors, l'opérateur n'a plus qu'à retirer à la main, sans outil, le nombre de feuilles nécessaires pour obtenir l'épaisseur souhaitée. Ceci permet un délitage simple, rapide et sécurisé de la cale de réglage ainsi réalisée.

Dans une variante de réalisation de l'invention, la quatrième étape durant laquelle la résine formant les couches de matériau liant du produit stratifié ou de la cale de réglage est polymérisée est remplacée par une étape similaire à la sixième étape précédemment décrite. Le produit stratifié ou la cale de réglage est soumise, dans un four ou une étuve, à une température supérieure à une température de dégradation ou de brûlage de la résine pendant une durée prédéterminée. Par exemple, dans le cas de l'utilisation de la résine époxy, la température utilisée est supérieure à 210°C et la durée est de 3 heures environ. De manière préférentielle, la température utilisée est supérieure ou égale à 220°C. De manière encore préférentielle, la température utilisée est supérieure ou égale à 240°C. De manière encore préférentielle, la température utilisée est supérieure ou égale à 260°C. De manière encore préférentielle, la température utilisée est supérieure ou égale à 270°C. De manière encore préférentielle, la température utilisée est supérieure ou égale à 280°C. De manière encore préférentielle, la température utilisée est supérieure ou égale à 300°C.

Après cette étape, il a été constaté que l'intégrité du produit stratifié n'est pas modifiée. En effet, ce dernier est manipulable sans avoir à changer les habitudes dans ce domaine. Cela signifie que, malgré une température supérieure à la température de dégradation ou de brulage de la résine, il reste suffisamment de matériau liant entre les feuilles formant le produit stratifié pour les maintenir suffisamment entre elles pour permettre toute manutention. En particulier, il est possible d'usiner ou de massicoter le produit stratifié ainsi obtenu afin d'ébaucher la cale de réglage, sans qu'il y ait de délitage. De nouveau, à l'utilisation, afin de permettre un délitage de la cale de réglage ainsi réalisée, il suffit d'appliquer un coup sec sur une partie d'un bord de la cale de réglage, comme un simple coup sur le coin d'une table d'atelier, pour amorcer le délitage, les feuilles empilées de la cale de réglage formant alors un éventail au niveau de la partie du bord de la cale ayant reçu le coup sec. Dès lors, l'opérateur n'a plus qu'à retirer à la main, sans outil, le nombre de feuilles nécessaires pour obtenir l'épaisseur souhaitée. Ceci permet un délitage simple, rapide et sécurisé de la cale de réglage ainsi réalisée.

Le procédé de fabrication d'une cale de réglage selon l'invention qui vient d'être décrit présente les avantages suivant lors de l'utilisation de la cale ainsi fabriquée :
- Il supprime le recours à l'outil de pelage.
- L'opération de délitage devient instantanée.
- Le risque de peler, involontairement, plusieurs lamelles est supprimé.
- Le risque de blessure, par coupure, est supprimé.
- Les coûts d'assemblage sont considérablement diminués.
- Les flux de production sont considérablement accélérés.
- Les feuilles de métal pelées sont réutilisables en cas de nécessité, car non déformées. Cela permet de réaliser des économies.

Bien entendu, il est possible d'apporter à l'invention de nombreuses modifications sans pour autant sortir du cadre de celle-ci.

## Revendications

1. Procédé de fabrication d'une cale de réglage comprenant des étapes de :
- Préparation d'une solution liquide comprenant une résine non polymérisée et du solvant en surabondance ;
- Enduction de plusieurs feuilles de métal avec la solution liquide de façon à constituer un film de résine sur au moins une face de feuille; et
- Empilement des feuilles de métal de façon à ce que deux feuilles de métal adjacentes soient séparées par le film de résine;
**caractérisé en ce que** le procédé comporte en outre une étape de cuisson durant laquelle l'empilement de feuilles de métal précédemment réalisé est soumis, durant une durée prédéterminée, à une température dont une valeur est supérieure à une valeur d'une température de dégradation ou de brulage de la résine.

2. Procédé de fabrication selon la revendication 1, **caractérisé en ce que**, préalablement à l'étape de cuisson, le procédé de fabrication comprend une étape de durant laquelle la résine est conduite à un état de polymérisation.

3. Procédé de fabrication selon la revendication 2, **caractérisée en ce que** ledit état de polymérisation de la résine est un état final de polymérisation.

4. Procédé de fabrication selon la revendication 2 ou 3, **caractérisée en ce que**, pour polymériser la résine, cette dernière est soumise à une température comprise entre 170°C et 180°C.

5. Procédé de fabrication selon l'une des revendications 1 à 4, **caractérisée en ce que**, pour préparer la solution liquide, le solvant est ajouté dans une proportion supérieure à 20% de la solution de façon à disperser la résine pour obtenir une épaisseur infinitésimale du film de résine.

6. Procédé de fabrication selon la revendication 5, **caractérisée en ce que**, pour préparer la solution liquide, le solvant est ajouté dans une proportion inférieure ou égale à 40% de la solution.

7. Procédé de fabrication selon l'une des revendications 1 à 6, **caractérisée en ce que** la résine est une résine du type appartenant à la famille des résines thermodurcissables.

8. Procédé de fabrication selon l'une des revendications 1 à 7, **caractérisé en ce qu'**il comporte en outre une étape d'ébauchage de la cale après l'étape de cuisson.

9. Procédé de fabrication selon l'une des revendications 1 à 8, **caractérisée en ce que**, lors de l'étape de cuisson, une valeur de la durée prédéterminée est de trois heures.

10. Procédé de fabrication selon l'une des revendication 1 à 9, **caractérisé en ce que**, lors de l'étape de cuisson, la valeur de la température est supérieure à 260°C, la résine étant une résine époxy.

11. Procédé de fabrication selon la revendication 10, **caractérisé en ce que** la valeur de la température est supérieure ou égale à 300°C.

12. Cale de réglage métallique, **caractérisé en ce qu'**elle est fabriquée selon le procédé de fabrication selon les revendications 1 à 11.

13. Cale de réglage métallique selon la revendication 12, **caractérisé en ce que**, lors d'un délitage, les feuilles métalliques pelées sont réutilisables.

## Patentansprüche

1. Herstellungsverfahren eines Justierungsabstandshalters, das die folgenden Schritte umfasst:
- Herstellen einer flüssigen Lösung, die ein nicht polymerisiertes Harz und Lösungsmittel im Überfluss umfasst,
- Bestreichen mehrerer Metallfolien mit der flüssigen Lösung, um einen Harzfilm auf mindestens einer Seite der Folie zu bilden, und
- Stapeln der Metallfolien derart, dass zwei benachbarte Metallfolien von dem Harzfilm getrennt sind,
**dadurch gekennzeichnet, dass** das Verfahren ferner einen Aushärtschritt aufweist, bei dem der zuvor hergestellte Metallfolienstapel während einer vorbestimmten Dauer einer Temperatur ausgesetzt wird, von der ein Wert über einem Wert einer Abbau- oder Brenntemperatur des Harzes liegt.

2. Herstellungsverfahren nach Anspruch 1, **dadurch gekennzeichnet, dass** das Herstellungsverfahren vor dem Aushärtschritt einen Schritt umfasst, bei dem das Harz zu einem Polymerisationszustand geführt wird.

3. Herstellungsverfahren nach Anspruch 2, **dadurch gekennzeichnet, dass** der Polymerisationszustand des Harzes ein Polymerisationsendzustand ist.

4. Herstellungsverfahren nach Anspruch 2 oder 3, **dadurch gekennzeichnet, dass** das Harz, um es zu polymerisieren, einer Temperatur zwischen 170 °C und 180 °C inklusive ausgesetzt wird.

5. Herstellungsverfahren nach einem der Ansprüche 1 bis 4, **dadurch gekennzeichnet, dass**, um die flüssige Lösung herzustellen, das Lösungsmittel in einem Verhältnis von über 20 % der Lösung hinzugefügt wird, um das Harz zu dispergieren, um eine unendlich kleine Stärke des Harzfilms zu erhalten.

6. Herstellungsverfahren nach Anspruch 5, **dadurch gekennzeichnet, dass**, um die flüssige Lösung herzustellen, das Lösungsmittel in einem Verhältnis von unter oder gleich 40 % der Lösung hinzugefügt wird.

7. Herstellungsverfahren nach einem der Ansprüche 1 bis 6, **dadurch gekennzeichnet, dass** das Harz ein Harz der Art ist, die zur Familie der duroplastischen Harze gehört.

8. Herstellungsverfahren nach einem der Ansprüche 1 bis 7, **dadurch gekennzeichnet, dass** es ferner einen Schritt der Rohbearbeitung des Abstandshalters nach dem Aushärtshritt aufweist.

9. Herstellungsverfahren nach einem der Ansprüche 1 bis 8, **dadurch gekennzeichnet, dass** beim Aushärtshritt ein Wert der vorbestimmten Dauer drei Stunden ist.

10. Herstellungsverfahren nach einem der Ansprüche 1 bis 9, **dadurch gekennzeichnet, dass** beim Aushärtshritt der Wert der Temperatur über 260 °C ist, wobei das Harz ein Epoxydharz ist.

11. Herstellungsverfahren nach Anspruch 10, **dadurch gekennzeichnet, dass** der Wert der Temperatur über oder gleich 300 °C ist.

12. Metall-Justierungsabstandshalter, **dadurch gekennzeichnet, dass** er gemäß dem Herstellungsverfahren nach den Ansprüchen 1 bis 11 hergestellt wird.

13. Metall-Justierungsabstandshalter nach Anspruch 12, **dadurch gekennzeichnet, dass** bei einer Fragmentierung die abgezogenen Metallfolien wiederverwendbar sind.

## Claims

1. A method for producing an adjustment spacer comprising steps for:
- preparing a liquid solution comprising a non-polymerized resin and a solvent in profusion;
- coating several metal sheets with the liquid solution so as to form a resin film on at least one sheet face; and
- stacking metal sheets so that two adjacent metal sheets are separated by the resin film;
**characterized in that** the method further includes a curing step during which the previously made stack of metal sheets is subject for a predetermined period, to a temperature, one value of which is greater than a value of a temperature for degradation or burning the resin.

2. The production method according to claim 1, **characterized in that**, prior to the curing step, the production method comprises a step during which the resin is brought to a polymerization state.

3. The production method according to claim 2, **characterized in that** said polymerization state of the resin is a final polymerization state.

4. The production method according to claim 2 or 3, **characterized in that**, for polymerization of the resin, the latter is subject to a temperature comprised between 170°C and 180°C.

5. The production method according to one of claims 1 to 4, **characterized in that**, for preparing the liquid solution, the solvent is added in a proportion greater than 20% of the solution so as to disperse the resin for obtaining an infinitesimal thickness of the resin film.

6. The production method according to claim 5, **characterized in that**, for preparing the liquid solution, the solvent is added in a proportion less than or equal to 40% of the solution.

7. The production method according to one of claims 1 to 6, **characterized in that** the resin is a resin belonging to the family of thermosetting resins.

8. The production method according to one of claims 1 to 7, **characterized in that** it further includes a step for roughing out the spacer after the curing step.

9. The production method according to one of claims 1 to 8, **characterized in that**, during the curing step, a value of the predetermined period is three hours.

10. The production method according to one of claims 1 to 9, **characterized in that**, during the curing step, the value of the temperature is greater than 260°C, the resin being an epoxy resin.

11. The production method according to claim 10, **characterized in that** the value of the temperature is greater than or equal to 300°C.

12. A metal adjustment spacer, **characterized in that** it is produced in accordance with the production method according to claims 1 to 11.

13. The metal adjustment spacer according to claim 12, **characterized in that**, upon disintegration, the peeled metal sheets are reusable.
